**Europäisches Patentamt**

**European Patent Office**

**Office européen des brevets**

(19)

(11) Veröffentlichungsnummer : **0 271 853 B2**

(12) # NEUE EUROPÄISCHE PATENTSCHRIFT

(45) Veröffentlichungstag der neuen Patentschrift :
**20.07.94 Patentblatt 94/29**

(21) Anmeldenummer : **87118447.9**

(22) Anmeldetag : **12.12.87**

(51) Int. Cl.⁵ : **A21D 13/00, B65D 65/38**

(54) Verpackung für Nahrungs- und Genussmittel und Verfahren zu ihrer Herstellung.

(30) Priorität : **18.12.86 DE 3643199**

(43) Veröffentlichungstag der Anmeldung :
**22.06.88 Patentblatt 88/25**

(45) Bekanntmachung des Hinweises auf die
Patenterteilung :
**18.09.91 Patentblatt 91/38**

(45) Bekanntmachung des Hinweises auf die
Entscheidung über den Einspruch :
**20.07.94 Patentblatt 94/29**

(84) Benannte Vertragsstaaten :
**AT BE CH DE ES FR GB IT LI LU NL**

(56) Entgegenhaltungen :
**WO-A-83/01726**
**DE-A- 2 701 765**
**DE-A- 2 835 700**
**DE-B- 1 221 585**
**DE-B- 2 514 163**
**US-A- 3 186 852**
**US-A- 3 526 515**
**US-A- 4 390 553**
**US-A- 4 603 051**

(73) Patentinhaber : **Munk, Werner Georg**
**Bergstrasse 12**
**D-88267 Vogt (DE)**
Patentinhaber : **Südmilch AG**
**Rosensteinstrasse 20**
**D-70191 Stuttgart (DE)**

(72) Erfinder : **Munk, Werner Georg**
**Bergstrasse 12**
**D-7981 Vogt über Ravensburg (DE)**
Erfinder : **Klecker, Manfred**
**Brühlsteige 47**
**D-7118 Künzelsau-Morsbach (DE)**
Erfinder : **Haas, Franz**
**Kreuzgasse**
**A-2100 Leobendorf (AT)**

(74) Vertreter : **Patentanwälte Ruff, Beier,**
**Schöndorf und Mütschele**
**Willy-Brandt-Strasse 28**
**D-70173 Stuttgart (DE)**

EP 0 271 853 B2

## Beschreibung

Die Erfindung betrifft eine Verpackung für Nahrungs- und Genußmittel aus verrottbarem, porösem Material, das an mindestens einem Teil der Innenwandung zur Abdichtung mit mindestens zwei verschiedenen Imprägnierungen auf Fettbasis versehen ist, von denen mindestens eine eine Grundierung und mindestens eine andere eine geschlossene Deckglasur ist, und ein Verfahren zu Ihrer Herstellung.

Das Übermaß der Verpackungen aus Kunststoff schafft ganz erhebliche Entsorgungsprobleme und Umweltprobleme. Gerade bei Lebensmitteln, insbesondere bei solchen, die zum Sofortverzehr bestimmt sind, werden häufig Kunststoffverpackungen verwendet. Werden sie beim Verzehr im Freien einfach weggeworfen, dann kann es oft Jahre dauern, bis sie zerfallen.

Es gibt zwar viele Verpackungen aus Papier, doch ist Papier für wasserhaltige Nahrungsmittel, fettende Nahrungsmittel sowie luftempfindliche Nahrungsmittel nicht geeignet. Beschichtete Papiere enthalten in der Regel einen feinen Überzug aus Kunststoffmaterial, was wiederum Probleme bei der Abfallbeseitigung bringt. Für Nahrungsmittel gibt es auch Verpackungen aus eßbarem Material, wie Waffelbecher für Eis.

Solche Waffelbecher sind jedoch nur für die sehr kurzfristige Aufbewahrung von Eis, d.h. gefrorenen Nahrungsmitteln, geeignet. Derartige Waffelbecher werden in der Regel an ihrer Innenseite mit Kokosfett imprägniert, um eine sofortige Durchweichung und Zerstörung des Bechers zu verhindern. Eine solche Imprägnierung stellt jedoch nur einen kurzfristigen Schutz dar. Versuche, feinporige Verpackungsmaterialien dadurch dicht zu bekommen, daß einfach mehr Kokosfett für die Imprägnierung verwendet wird, führten nicht zum Erfolg, da das Kokosfett bei Verwendung größerer Mengen durchschlägt, was nicht erwünscht ist. Außerdem neigt das Kokosfett in dickeren Schichten zur Rißbildung, so daß der gewünschte Erfolg nicht eintritt.

In der deutschen Auslegeschrift 1 221 585 und der parallelen US-A-3 186 852 ist ein Verfahren zum Schutz der Oberfläche einer zu füllenden Dauerbackware gegen ein Durchfeuchten beschrieben. Dort wird die Dauerbackware, z.B. eine Waffeltüte, zunächst mit einer Fettgrundierung imprägniert. Auf diese imprägnierte Oberfläche wird dann eine kolloidale Fett-Dispersion aufgebracht, worauf sofort das Füllgut bei Temperaturen unter -3 °C eingebracht wird. Das kalte Füllgut führt zu einer sofortigen Verfestigung der kolloidalen Dispersion. Als kolloidale Dispersion wird eine Schokoladendispersion verwendet in Form einer Mischung aus Kokosfett, Zucker, Milchpulver und Teilchen von gemahlenen Kakaobohnen. In derartig imprägnierten Dauerbackwaren kann Eiscreme in der Tiefkühltruhe über einen längeren Zeitraum gelagert werden. Es ist auch eine kurzzeitige Erwärmung bis auf Zimmertemperatur möglich. Für eine längere Lagerung im sogenannten Kühlbereich, d.h. bei Temperaturen über 0 °C, ist die Imprägnierung jedoch nicht geeignet, da eine Durchweichung stattfindet. Es ist auch erwähnt, daß die festen Bestandteile von Schokolade einzeln in der Dispersion verwendet werden können.

Aus der internationalen Anmeldung WO 83/01726 ist weiterhin ein eßbarer Behälter in Form eines gebackenen Brotes bekannt. Das Brot hat eine konische Vertiefung, deren eine Kruste aufweisende Innenseite zur Erhöhung der natürlichen Undurchlässigkeit mit Fettglasur versehen ist, so daß feuchte oder gar flüssige Nahrungsmittel eingefüllt werden können. Der eßbare Behälter ist jedoch nicht zur Lagerung, sondern zum sofortigen Verzehr bestimmt.

In der US-A-3 526 515 wird zum Ausdruck gebracht, daß eine Doppelbeschichtung der porösen Behälter keine wesentlichen Vorteile bringt. Mehrfachbeschichtungen werden zwar nicht ausgeschlossen, eine verbesserte Abdichtung wird aber Zusätzen von Stearin und Palmitin (Tristearin und Tripalmitin) zugesprochen. Diese hochschmelzenden Fette wirken in der Fettmischung als Keime zur Verfestigung der Fettmischung. Es ist ein besonderer Test für die Feuchtigkeitsdichtigkeit beschrieben. Während für die Doppelbeschichtung eine Zeit von nur 15 Minuten bis zur Durchfeuchtung erreicht wird, werden mit Hilfe des Zusatzes von Palmitin bzw. Stearin Durchfeuchtungsfestigkeiten von 90 bis 105 Minuten erzielt. Die Fettschicht kann verschiedene Geschmacksstoffe und färbende Materialien enthalten. Darunter ist auch Schokolade ausdrücklich erwähnt.

Gemäß einem in der US-A-4 390 553 beschriebenen Verfahren wird eine verbesserte Dichtigkeit dadurch erzielt, daß die Imprägnierung mit dem Fett besonders sorgfältig ausgeführt wird, indem das zur Imprägnierung verwendete Fett in dem abzudichtenden Behälter geschleudert und damit vollflächig und dicht mit der Innenoberfläche des Behälters verbunden wird. Gleichzeitig wird die Verwendung von hochschmelzenden Materialien als nachteilig bezeichnet, weil sie nachteilige Auswirkungen auf das Geschmacksempfinden haben. Auch das Imprägnieren unter Bildung von mehreren Schichten wird als nachteilig bezeichnet, weil auch mehrere Schichten einen unangenehmen Geschmack durch Fettüberschuß verursachen. Deshalb wird nur eine einmalige Beschichtung vorgenommen. Die verwendeten Fette können ebenfalls Feststoffe enthalten. Als Fett kann wiederum Schokolade verwendet werden.

Der Erfindung liegt die Aufgabe zugrunde, eine auch bei Aufbewahrungstemperatur bzw. Gebrauchstemperatur des Nahrungsmittels bei Temperaturen über 0 °C mindestens begrenzt haltbare Verpackung zu schaffen, die leicht entsorgt werden kann. Die Verpackung soll auch für flüssige, ölige und luftempfindliche Stoffe

2

brauchbar sein.

Die Erfindung ist dadurch gekennzeichnet, daß die mindestens eine Deckglasur frei von Saccharose ist, die mindestens eine Grundierung einen höheren Verfestigungstemperaturbereich besitzt als die Deckglasur und die Deckglasur hydrophober eingestellt ist als die darunterliegende Haftgrundierung. Vorzugsweise ist auch die mindestens eine Grundierung frei von Saccharose.

Gemäß einer anderen Lösung der gestellten Aufgabe enthält die Deckglasur mindestens einen feinteiligen, im Fett eingelagerten und darin unlöslichen Feststoff, wobei die Erfindung dadurch gekennzeichnet ist, daß die mindestens eine Deckglasur frei von Saccharose ist und daß der feinteilige Feststoff mindestens teilweise aus Casein besteht. Beide erfindungsgemäßen Lösungen können mit Vorteil kombiniert sein.

Obwohl die Zuckerkristalle bei der Deckglasur nach der DE-AS 1 221 585 durch die Fettmasse eingeschlossen sind, wurde gefunden, daß das völlige Weglassen von Zucker in der Deckglasur eine erhebliche Verbesserung der Dichtigkeit bringt, so daß auch flüssiger Inhalt im Kühlbereich lange Zeit aufbewahrt werden kann. Vorzugsweise ist zumindest die Deckglasur auch frei von anderen löslichen Sacchariden. Dies gilt mit Vorteil auch für die Grundierung.

Nach der Erfindung kann die Abdichtung dadurch ausgebildet sein, daß mindestens zwei verschiedene Imprägnierungen auf Basis Fett vorgesehen sind, von denen die erste vorzugsweise einen bei höherer Temperatur liegenden Verfestigungsbereich hat als die zweite. Auf diese Weise kann die Deckglasur als zweite Imprägnierung aufgebracht werden, ohne daß die erste Imprägnierung angeschmolzen wird. Die zweite und ggf. weitere Imprägnierung ist dadurch in der Lage, die Poren auszufüllen und eine geschlossene Schicht an der Verpackungsinnenseite auszubilden. Die Differenz zwischen den Schmelz- bzw. Verfestigungsbereichen von Grundierung und Deckglasur liegt vorzugsweise nicht über 5 °C, insbesondere nicht über 2 °C.

Als Fett wird vorzugsweise Pflanzenfett verwendet. Die Fette der Fettglasuren sind vorzugsweise verschieden hydrophob eingestellt, wobei die Hydrophobie vom Wandmaterial der Verpackung in Richtung zum Verpackungs-Innenraum zunimmt. Eine weniger hydrophobe Fettglasur dringt gut in die Poren des wenig hydrophoben Verpackungsmaterials ein, da es die Oberfläche des Verpackungsmaterials zu benetzen vermag. Gleichzeitig bildet die weniger hydrophobe Imprägnierung einen Haftgrund für die stärker hydrophobe Fettglasur, wodurch ein Abplatzen der hydrophoben Fettglasur verhindert wird. Die im Vergleich zu Kokosfett stärker hydrophobe Fettglasur der Deckschicht ist ihrerseits gegenüber einem flüssigen oder feuchten Verpackungsinhalt sehr stabil und gewährt auch über längere Zeiträume die gewünschte Dichtigkeit, auch gegenüber Nahrungsmittelsäuren.

Die Deckglasur enthält bei einer besonders bevorzugten Ausführungsform feinteilige Feststoffe, die in Fett nicht löslich sind. Solche feinteiligen Feststoffe führen zu einer erhöhten Festigkeit und Widerstandsfähigkeit der Deckglasur. Gleichzeitig verhindern die feinteiligen Feststoffe, die vorzugsweise durch das Fett gut benetzbar sind, daß das Fett von den Poren des Verpackungsmaterials aufgesaugt wird. Mit besonderem Vorteil wird mindestens eine feststoffreie Fettglasur zur Grundierung und Vorimprägnierung verwendet, die dann mit mindestens einer feststoffhaltigen Deckglasur überdeckt wird. In der Regel reichen zwei Glasuren, nämlich eine Grundierungsglasur und eine Deckglasur aus. Ein mehrmaliger Auftrag entsprechend geringerer Mengen erhöht die Dichtigkeit. Die Schichtdicke der Deckglasur beträgt vorzugsweise 0,1 - 1 mm, insbesondere 0,2 - 0,5 mm und dies an den dünnsten Stellen.

Das Material der Verpackung ist vorzugsweise biologischen Ursprungs, insbesondere pflanzlichen Ursprungs, z.B. auf Basis von Zerealien. Materialien auf Basis von Stärke und/oder Zellulose sind bevorzugt.

Mit besonderem Vorteil besteht die Verpackung mindestens teilweise aus eßbarem Material, das in trockener, insbesondere durchgebackener Form vorliegt. Hierzu eignen sich besonders Dauerbackwaren wie Waffelgebäck, Gebäck nach der Art von Knäckebrot, Extrudate, insbesondere solche auf Basis von Reis und/oder Mais, sowie eßbare Stärkemehlprodukte. Solche Verpackungen, die aus Stärkemehlbrei hergestellt sind, sind weiß und elastisch, d.h. sie haben gute mechanische Eigenschaften und sind auch einfärbbar und bedruckbar. Die Verpackungen können sogar mehlfrei hergestellt sein, insbesondere nur unter Verwendung von Stärke und Wasser, wobei ein Zusatz von Milchzucker günstig ist. Eßbare Verpackungsmaterialien, die mit der erfindungsgemäßen Deckglasur versehen sind, bieten keinerlei Entsorgungsprobleme, da sie verrottbar sind oder auch beim Verzehr des Inhalts mitverzehrt werden können. Es ist dann allenfalls noch eine aus hygienischen Gründen zweckmäßige Umhüllung vorgesehen, die beispielsweise aus leicht verrottbarem Papier o.dgl. bestehen kann.

Das Verpackungsmaterial für die erfindungsgemäße Verpackung ist vorzugsweise selbsttragend steif, wobei dünnwandige Verpackungen von besonderem Vorteil sind. Bei eßbaren Verpackungsmaterialien liegen die Wandstärken in der Regel unter 6 mm, insbesondere im Bereich von 0,5 - 5 mm, wobei das Stärkemehlgebäck eher im unteren Bereich und ein Waffelgebäck mehr im oberen Bereich liegen kann. Die zu beschichtenden Innenflächen der Behältnisse sind vorzugsweise glatt, wenn man die natürlichen Poren unberücksichtigt läßt. Die Außenseite kann strukturiert sein. Wände und Boden gehen vorzugsweise mit abgerundeten Kanten ineinander über.

Die erfindungsgemäße Verpackung liegt vorzugsweise in Form eines Behältnisses, wie einer Schachtel oder eines Bechers, vor. Ein solches Behältnis kann feuchtigkeitsdicht und ggf. auch luftdicht verschließbar sein. Hierzu kann ein Deckel oder Verschluß, der aus demselben oder einem anderen Material bestehen kann wie die übrige Verpackung, in gleicher Weise mit einer Deckglasur versehen sein. Diese verfestigte Deckglasur kann zur Heißsiegelung bzw. zum dichten Verschweißen des Deckels mit dem übrigen Behältnis verwendet werden. Hierzu kann die Deckglasur zum Beispiel durch Warmluft im Bereich zwischen der Berührungsfläche des Deckels mit dem Behältnisrand geschmolzen und nach Aufsetzen des Deckels durch Abkühlen verfestigt werden. Auf diese Art und Weise können flüssige und/oder fetthaltige aber auch luftempfindliche Nahrungs- und Genußmittel über ausreichend lange Zeit aufbewahrt werden, ohne daß sie verderben oder die Verpackung ihre Schutzfunktion und Festigkeit verliert.

Die Verpackung kann jedoch auch in anderer Form gestaltet sein, so kann sie, insbesondere bei kompaktem, nicht fließfähigem Inhalt oder wenn eine vollständige Umhüllung aus anderen Gründen nicht notwendig ist, auch in Form eines an mindestens einer Seite offenen Rohres, in Form von Platten, insbesondere Sandwichplatten, Schalen oder Tellern vorliegen. Je nach Art des Verpackungsinhaltes braucht auch nicht die gesamte Innenwand mit der Deckglasur versehen zu sein. So kann eine unterteilte Schachtel o.dgl. in einem Teil die Deckglasur aufweisen und mit einem flüssigen oder ölhaltigen Nahrungsmittel gefüllt sein, wogegen in seinem anderen Teil trockene Güter, wie Nüsse, Gebäck o.dgl. aufbewahrt sein können. Der Inhalt der Verpackung kann in weitem Bereich variieren und liegt in der Regel zwischen einigen Millilitern und einem Liter, insbesondere im Bereich zwischen 25 und 1000 cm$^3$.

Die Menge an Fettglasur pro Flächeneinheit liegt, unabhängig davon, ob sie in einer oder mehreren Schichten vorliegt, mit Vorteil im Bereich zwischen 4 und 10 g/100 cm$^2$. Die Grundierungsmenge beträgt in der Regel 2 bis 6 insbesondere 4 - 6 g/100 cm$^2$ und die Menge an Deckglasur in der Regel 2 - 4 g/100 cm$^2$.

Der feinteilige Feststoff der Deckglasur ist vorzugsweise in Nahrungsmittelsäuren schwer löslich, insbesondere unlöslich. Der Feststoff muß lebensmittelrechtlich zulässig sein, er braucht jedoch nicht verdaubar zu sein. Als Feststoff eignen sich Materialien organischen Ursprungs, insbesondere solche, die selbst Nahrungsmitteleigenschaften haben. Als Feststoff bevorzugt ist Milcheiweiß. Besonders bevorzugt ist Casein und insbesondere in Wasser kalt lösliches Casein. Auch andere quellbare Stoffe wie kaltquellende Stärke, insbesondere in Mischung mit Casein, kommen in Frage. Möglicherweise vermögen quellbare Stoffe etwa eingedrungenes Wasser zu binden und dabei dichtend zu wirken. Bevorzugt sind pasteurisierbare Glasuren, was beispielsweise bei einer kalt lösliches Casein enthaltenden Deckglasur der Fall ist.

Die Menge des Feststoffpulvers in der Deckglasur kann in weiten Bereichen variieren und beträgt vorzugsweise 10 - 80, insbesondere 15 - 50 Gew.-%, bezogen auf das Gewicht der Deckgiasur. Bei Casein liegt der günstigste Bereich bei etwa 25 - 30 Gew.-%. Für die Deckglasur werden vorzugsweise Fettmischungen, insbesondere solche mit geeignet eingestelltem Erweichungs- bzw. Verfestigungsbereich, verwendet. Dadurch wird erreicht, daß die Deckglasur bei Lagerungs- und Gebrauchstemperatur elastisch bis plastisch bleibt, so daß Rißbildungen bei Temperaturschwankungen und etwaigen mechanischen Belastungen der Verpackung vermieden werden. Der Erweichungs- bzw. Verfestigungsbereich liegt vorzugsweise innerhalb 4 - 8 °C Temperaturdifferenz. Die Höhe des Erweichungs- bzw. Verfestigungsbereiches, gemessen als Fließschmelzpunkt nach DGF-Einheitsmethode C-IV 3a (1952) bzw. als Erstarrungspunkt nach DGF-Einheitsmethode C-IV 3c (1957), hängt von der Lagerungs- und Gebrauchstemperatur des Verpackungsinhaltes ab und kann zwischen 15 und 45 °C liegen. In der Regel reicht ein Erweichungsbereich zwischen 20 und 40 °C für viele Anwendungsbereiche aus, so z.B. für Nahrungsmittel im Kühlbereich als auch für solche, die bei normaler Temperatur aufbewahrt werden.

Die gewünschte Hydrophobie kann dadurch erhalten werden, daß Fette mit langkettigen Fettsäuren und oder langkettigen Alkoholen und gehärtete Fette verwendet werden. Sojahartfett, insbesondere in Mischung mit Kokosfett hat sich gut bewährt. Das Mischungsverhältnis kann bei 40 bis 90 Gew.-% Sojahartfett und 10 bis 60 Gew.-% Kokosfett liegen und liegt vorzugsweise bei 60 bis 80 Gew.-% Sojahartfett und 20 bis 40 Gew.-% Kokosfett. Durch die Zugabe von Kokosfett wird Sojahartfett elastisch. Der Erweichungs- bzw. Verfestigungsbereich von Sojahartfett kann durch Vermischen mit Sojaöl eingestellt werden. Hierzu reichen in der Regel 5 bis 10 Gew.-% Sojaöl aus. Entsprechendes gilt auch für andere Fette und Öle. Anstelle von Pflanzenfetten können auch entsprechende Tierfette, wie gehärtetes Walfett verwendet werden. Bevorzugt sind auch sogenannte esterfreie Fette und auch nichtveresterte, langkettige Fettsäuren. Geeignet sind auch hydrophobe lebensmittelrechtlich zugelassene Wachse, wie z.B. Carnauba-Wachs. Durch die hydrophobe Einstellung der Fette der Deckgiasur wird diese gegenüber Milchsäure und andere Nahrungsmittelsäuren besonders beständig. Die Deckglasur ist mit Vorteil farbig oder gefärbt. Sie kann weiß pigmentiert sein, oder auch eine andere zum Packungsinhalt und/ oder zur Packung passende Farbe besitzen. Die Deckgiasur, insbesondere der Feststoffanteil, ist vorzugsweise frei von Lipase.

Für die Grundierung bzw. den Haftgrund werden vorzugsweise solche Fette verwendet, die in geschmolzenem Zustand niedrig-viskos sind. Hierzu eignen sich besonders Kokosfett und gehärtete Fette mit einem Schmelzbereich, der bei oder über dem der Deckglasur liegt, insbesondere im Bereich zwischen 22 und 40 °C.

Die Erfindung betrifft auch ein Verfahren zur Herstellung der erfindungsgemßen Verpackung. Dieses Verfahren ist dadurch gekennzeichnet, daß mindestens eine geschmolzene fetthaltige saccharosefreie Masse in mindestens einer Schicht bis zur Ausbildung einer geschlossenen Deckschicht auf der zu beschichtenden, vorimprägnierten Innenfläche der vorzugsweise vorgekühlten Verpackung aufgebracht und dann durch Abkühlen verfestigt wird. Die Masse ist vorzugsweise frei von leicht wasserlöslichen Bestandteilen. Sie wird insbesondere in wasserfreiem Zustand aufgetragen.

Die Deckglasur wird vorzugsweise erst kurz vor dem Befüllen der Verpackung aufgebracht. Vor dem Befüllen wird die Verpackung mit Vorteil auf die unterhalb des Schmelzbereiches liegende Befüllungstemperatur gekühlt. Dadurch wird erreicht, daß die Deckglasur schnell fest wird, bevor befüllt wird.

Die Glasuren können durch Tauchen, Streichen, Spritzen o.dgl. aufgetragen werden, wobei das Aufspritzen bevorzugt ist. Becherförmige Verpackungsteile werden vorzugsweise während des Spritzens oder nach dem Spritzen mit der Öffnung nach unten gehalten, so daß überschüssiges Fett abtropfen kann. Hierbei kann gleichzeitig auch eine Beschichtung des Verpackungsrandes vorgenommen werden, die zur abdichtenden Versiegelung verwendet werden kann. Auch die sogenannte Verdrängungsbeschichtung mit Hilfe von im wesentlichen paßgenauen Innenstempeln hat sich bewährt. Werden die Deckglasur und vorzugsweise auch die Grundierung pasteurisiert oder kurzzeiterhitzt, dann werden besonders lange lagerfähige Packungen erhalten. Bevorzugt werden die Behältnisse bzw. die Verpackung in keimarmem oder keimfreiem Zustand eingesetzt.

Die Erfindung betrifft auch Behältnisse, die für die Beschichtung mit der Deckglasur geeignet sind. Solche Behältnisse besitzen eine poröse Innenwandung, die jedoch im übrigen glatt ausgebildet ist, also frei von einer Rasterung oder Verrippung ist. Glattwandige Unterteilungen, die ihrerseits eine poröse Innenfläche darstellen, können jedoch vorgesehen sein. Die Behältnisse sind vorzugsweise eßbar und einstückig aus einem Teig geformt, der bis zur Trockne durchgebacken ist. Als Teig eignet sich an sich bekannter Teig für Dauerbackwaren, insbesondere aber Stärkemehl-Teig. Der Teig hat vorzugsweise einen verminderten Zuckergehalt, insbesondere im Bereich von 2 bis 8 Gew.-%, oder ist gar im wesentlichen zuckerfrei. Durch die Herabsetzung des Zuckergehaltes wird die Feuchtigkeitsempfindlichkeit der Dauerbackware verringert. Gleichzeitig wird eine hohe Feinporosität erhalten, die eine Diffusion von Feuchtigkeit von innen nach außen begünstigt. Die Feinporosität ergibt auch eine gute Wärmeisolation. Falls erwünscht, kann auch die Außenseite mit einer Fettgrundierung imprägniert sein, die vorzugsweise noch porös ist.

Ein geeigneter Waffelteig hat insbesondere die folgende Zusammensetzung:

| | |
|---|---|
| Mehl | 20 - 40 Gew.-%, |
| | vorzugsweise ca. 25 Gew.-% |
| Kartoffelstärke | 5 - 25 Gew.-%, |
| | vorzugsweise ca. 20 Gew.-%- |
| Zucker | 0 - 10 Gew.-%, |
| | vorzugsweise 2 - 8 Gew.-% |
| Salz | 0-1 Gew.-%, |
| | vorzugsweise ca. 0,4 Gew.-% |
| Lecithin | 0 - 0,5 Gew.-%, |
| | vorzugsweise ca. 0,3 Gew.-% |
| Fett | 1 - 5 Gew.-%, |
| | vorzugsweise ca. 3 Gew.-% |
| Sojamehl | 0 - 5 Gew.-%, |
| | vorzugsweise ca. 3 Gew.-% |
| Geschmacksstoffe | 0 - 0,5 Gew.-%, |
| | vorzugsweise 0,1 Gew.-% |

Rest Wasser.

Ein Stärkemehlbrei aus gereinigter Stärke, der mit besonderem Vorteil zur Herstellung farbloser Behältnisse verwendbar ist, der jedoch auch mit Farbzusätzen versetzt werden kann, hat insbesondere folgende Zusammensetzungen (in Gewichtsteilen):

```
Mehl        30 - 50,    insbesondere ca. 40
Stärke      30 - 40,    insbesondere ca. 33
Zucker       0 - 20,    insbesondere ca. 13
Salz         0 -  1,    insbesondere ca.  0,7
Lezithin     0 -  1,    insbesondere ca.  0,5
Fett         3 -  7,    insbesondere ca.  5
Aroma        0 -  0,25, insbesondere ca.  0,2
Sojamehl     3 -  7,    insbesondere ca.  5
```

Wasser im Verhältnis Trockensubstanz zu Wasser von etwa 3 : 2.

Das Ausbacken dieses Stärkemehlbreies erfolgt in derselben Weise wie beim Waffelteig, wobei die Temperaturführung so vorgenommen wird, daß keine Gelb- oder Braunfärbung erfolgt. Da Mehl kann auch vollständig durch Stärke ersetzt werden.

Für die Grundierung eignet sich Kokosfett mit einem Schmelzbereich von 24 - 27 °C, wenn eine Lagerung im Kühlbereich (+4 °C - +15 °C) vorgesehen ist. Für eine Lagerung bei Normaltemperatur sind gehärtete Fette sowie deren Mischung mit Ölen mit Schmelzbereich über 30 °C, insbesondere 35 - 40 °C bevorzugt.

Auch die Deckglasur richtet sich mit Vorteil nach dem Temperaturbereich, bei dem das Füllgut gelägert werden soll. Für den Kühlbereich eignen sich Fettmischungen mit Schmelzbereich bei ca. 20 - 25 °C und für Lagerung bei Normaltemperatur mit einem Schmelzbereich von 35 - 40 °C. Bevorzugte Deckglasuren enthalten (in Gewichtsteilen):

```
Sojahartfett (Schmelzpunkt 38 °C)   50 - 90
Sojaöl                                       0 - 20
Kokosfett                                   50 - 10
Casein                                      10 - 60.
```

Das Casein kann als natives Casein oder als Caseinat vorliegen. Bevorzugt ist in Wasser kalt lösliches Milcheiweiß bzw. Casein.

Weitere Merkmale der Erfindung ergeben sich aus den nachfolgenden Beispielen in Verbindung mit den Unteransprüchen. Hierbei können die einzelnen Merkmale jeweils für sich allein oder in Kombination miteinander bei einzelnen Ausführungen verwirklicht sein.

Beispiel 1

Es wird ein Dreier-Set von Waffelbechern gebacken unter Verwendung eines an sich bekannten Waffelteigs, der jedoch im wesentlichen zuckerfrei ist. Er wird in einer Backform ausgebacken, deren zur Bildung der Innenwandung dienender Kern glattflächig ist. Beim Dreier-Set sind die Becher ähnlich wie dies bei Joghurt-Bechern aus Kunststoff bekannt ist, über ihre oberen horizontalen Flanschränder miteinander verbunden. Zusätzlich sind jedoch vorzugsweise vertikal verlaufende versteifende Verbindungsstege vorgesehen. Diese können an der Unterseite der flanschartigen Verbindungsränder angeformt sein und die Behälterwandungen miteinander verbinden. Die Versteifungsstege können jedoch auch getrennt vom oberen Flanschrand vorgesehen sein. Die Becher können außen glattflächig ausgebildet oder mit einer Struktur versehen sein.

Die vorgekühlten Becher werden einmal mit gehärtetem Pflanzenfett (Kokosfett, Härtegrad 23 - 28 °C) mit Hilfe eines Zerstäubers bei einer Fett-Temperatur von +30 °C ausgesprüht und danach durch Einsetzen in einen Kühlschrank (Temperatur ca. +8 °C) sofort gekühlt. Dadurch wird erreicht, daß sich die Grundierung innerhalb der Oberflächenschicht verfestigt und dort in der gewünschten Menge vorliegt. Gleichzeitig wird ein Durchschlagen des Fettes verhindert.

Die gekühlten imprägnierten Becher werden kurz vor dem Befüllen mit einer Deckglasur besprüht, die die folgende Zusammensetzung besitzt (in Gewichtsteilen):

| Sojahartfett (Härtegrad 38 °C) | 45 | |
|---|---|---|
| Sojaöl | | 5 |
| Kokosfett | | 50 |
| Caseinat (sprühgetrocknet) | 50. | |

Der Gesamt-Fettgehalt der Deckglasur beträgt somit ca. 67 Gew.-%. Das Caseinat dient vorwiegend zur Erhöhung der mechanischen Festigkeit der Deckglasur, insbesondere in Bezug auf eine Vermeidung von Rißbildungen, gibt der Glasur jedoch auch eine gleichmäßige weiße Färbung. Die Deckglasur ist bei diesem Beispiel ebenfalls auf einen Härtegrad bzw. Verfestigungsbereich von +23 bis +27 °C eingestellt. Die Waffelbecher werden mit nach unten gedrehter Öffnung besprüht, wobei die mit +30 °C aufgesprühte Glasur beim Auftreffen auf die Becherinnenwand zumindest an der Berührungsfläche sofort verfestigt wird; überschüssiges Material kann nach unten abtropfen und gibt gleichzeitig einen leichten Wulst am abgeflachten Becherrand, der für die spätere Versiegelung mit einem in gleicher Weise beschichteten Deckel dient.

Der so beschichtete Dreier-Set wird auf Temperaturen von +10 bis +12 °C gekühlt und dann bei dieser Temperatur bis 1 cm unterhalb der Oberkante befüllt. Als Füllmasse dient Joghurt, insbesondere Fruchtjoghurt oder Quark. Danach wird der Deckel aufgelegt und durch kurzzeitiges Erwärmen des Randbereiches, beispielsweise mit Heißluft, versiegelt.

Der befüllte Becher ist im Kühlschrank bei Temperaturen von +10 - +12 °C über längere Zeit lagerfähig, ohne daß die Feuchtigkeit durchschlägt.

Zur Handhabung empfiehlt es sich aus hygienischen Gründen, die Becher in eine dünne Schutzhülle zu setzen, die nicht selbsttragend zu sein braucht. Hier kann eine Papierumhüllung oder eine sonstige, vorzugsweise belüftete Umhüllung ausreichen.

Beispiel 2

Zwei rechteckige Scheiben aus einem Zerialienextrudat von 14 cm Länge, 5 cm Breite und 0,5 cm Dicke werden bei Raumtemperatur auf einer Seite zwei Mal mit Kokosfett (Härtegrad 23 - 27 °C) besprüht. Das zweite Besprühen erfolgt unmittelbar nach dem Erstarren des ersten Fettauftrages. Pro Scheibe werden für diese Grundierung 4 g Kokosfett verwendet. Die Scheiben werden dann im Kühlschrank auf ca. +8 °C gekühlt.

Zur Herstellung der Deckglasur werden 37 Gew.-Teile Sojahartfett, 4 Gew.-Teile Sojaöl und 7 Gew.-Teile Kokosfett miteinander verschmolzen. In die Schmelze werden 14 Gew.-Teile kalt lösliches Casein eingerührt, wobei gleichzeitig gegebenenfalls noch Geschmacks- und Farbstoffe zugegeben werden können. Diese Deckglasurmischung wird pasteurisiert und mit einer Temperatur von +27 °C auf die mit der Grundierung versehenen und gekühlten Extrudatscheiben mit einem Pinsel dünn aufgetragen und dann bei Raumtemperatur zur Erstarrung gebracht. Die Menge an Deckglasur beträgt 2 - 3 g pro Scheibe. Die auf diese Art imprägnierten und beschichteten Scheiben werden dann wiederum im Kühlschrank auf +8 -+10 °C gekühlt. Danach werden die Extrudatscheiben beidseitig auf eine 5 mm dicke Scheibe aus Schweinskopfsülze gelegt und leicht angedrückt, wobei die imprägnierte Seite zur Schweinskopfsülze weist. Der so gebildete Sandwich wird bei 0,4 - 0,6 bar Unterdruck in Polypropylenfolie vakuumverpackt. Der Sandwich kann tagelang im Kühlbereich aufbewahrt werden, ohne daß die Extrudatscheiben weich werden.

Beispiel 3

Ein runder Waffelbecher mit ebenem Boden, der aus einem zuckerfreien Teig gefertigt ist, wird mit den in Beispiel 2 beschriebenen Glasuren für die Grundierung und für die Deckglasur unter den dort beschriebenen Bedingungen beschichtet, wobei jedoch die Deckglasur durch Verdrängungsbeschichtung aufgebracht wurde. Der Becher wurde dann mit chemisch-konserviertem Fleischsalat gefüllt und mit einem Inlay-Deckel aus Karton verschlossen, der ebenfalls imprägniert war. Die Abdichtung erfolgte durch Eindrücken des Deckelrandes in die Deckglasur der Becherinnenseite. Der Fleischsalat konnte während seiner Haltbarkeitsdauer im Kühlbereich aufbewahrt werden, ohne daß der Waffelbecher Erweichungs- oder Durchfeuchtungserscheinungen zeigte.

Beispiel 4

Ein Eiscreme-Waffelbecher mit ebenem Boden wurde unter Verwendung eines Stärkemehlbreis in einer Waffelbecherform hergestellt. Der Becher war dünnwandig, elastisch und von weißer Farbe. Der Becher wurde zunächst mit einer Mischung von 80 Gew.-Teilen Sojahartfett und 20 Gew.-Teilen Kokosfett grundiert und danach mit einer Deckglasur aus 85 Gew.-Teilen Sojahartfett, 15 Gew.-Teilen Kokosfett, 25 Gew.-Teilen Säure-Casein- Pulver und 10 Gew.-Teilen Pulver aus kaltquellender Stärke beschichtet. Der beschichtete Becher wurde nach Verfestigung der Deckglasur bei Zimmertemperatur mit Marmelade gefüllt. Der Becher blieb bei Aufbewahrung bei Raumtemperatur fest und trocken.

Beispiel 5

Zäh eingestellter Stärkemehlbrei wurde in einer Form zu einer Flasche geblasen und dann ausgebakken. Die Flasche wurde innen zwei Mal mit einer Mischung aus 80 Gew.-Teilen Sojahartfett und 20 Gew.-Teilen Kokosfett grundiert und danach mit einer Deckglasur zwei Mal beschichtet, wobei die Deckglasur 85 Gew.-Teile Sojahartfett, 15 Gew.-Teile Kokosfett und 70 Gew.-Teile Säure-Casein enthielt. Beide Glasuren wurden vor dem Auftragen pasteurisiert. Nach dem Abkühlen und Verfestigen der Deckglasur wurde die Flasche mit konvervierter kohlensäurefreier Limonade bis kurz unter die Öffnung gefüllt und dann mit einem ebenfalls imprägnierten Stärkemehlstopfen verschlossen.

Die Flasche war dicht und fest. Die Bruchsicherheit der Flasche konnte noch dadurch erhöht werden, daß in den Stärkemehlbrei bei der Herstellung der Flasche Zellulosefasern eingearbeitet wurden.

Nach dem Gebrauch kann die Flasche weggeworfen werden. Sie verrottet im Freien oder im Müll, ohne daß schädliche oder störende Rückstände übrig bleiben.

Die Erfindung ist nicht auf die beschriebenen Beispiele beschränkt. Es sind vielmehr Abwandlungen hiervon möglich, ohne daß der Rahmen der Erfindung verlassen wird. So eignen sich die neuen Stärke- bzw. Stärkemehlbehältnisse, insbesondere in Becher- bzw. Tütenform, auch für die andere Zwecke, für die die bisherigen Waffel- bzw. Eiscremebecher sonst eingesetzt werden. Für Eiscreme bei Temperaturen unter 0 °C können sie wie die herkömmlichen Waffelbecher auch ohne Imprägnierung oder mit der üblichen Kokosfett-Imprägnierung, wie sie hier für die Grundierung verwendet wird, eingesetzt werden.

**Patentansprüche**

1. Verpackung für Nahrungs- und Genußmittel aus verrottbarem, porösem Material, das an mindestens einem Teil der Innenwandung zur Abdichtung mit mindestens zwei verschiedenen Imprägnierungen auf Fettbasis versehen ist, von denen mindestens eine eine Grundierung und mindestens eine andere eine geschlossene Deckglasur ist, dadurch gekennzeichnet, daß die mindestens eine Deckglasur frei von Saccharose ist, die mindestens eine Grundierung einen höheren Verfestigungstemperaturbereich besitzt als die Deckglasur und die Deckglasur hydrophober eingestellt ist als die darunterliegende Haftgrundierung.

2. Verpackung für Nahrungs- und Genußmittel aus verrottbarem, porösem Material, das an mindestens einem Teil der Innenwandung zur Abdichtung mit mindestens zwei verschiedenen Imprägnierungen auf Fettbasis versehen ist, von denen mindestens eine eine Grundierung und mindestens eine andere eine geschlossene Deckglasur ist, die mindestens einen feinteiligen, im Fett eingelagerten und darin unlöslichen Feststoff enthält, dadurch gekennzeichnet, daß die mindestens eine Deckglasur frei von Saccharose ist und daß der mindestens eine feinteilige Feststoff Casein ist.

3. Verpackung nach Anspruch 1, dadurch gekennzeichnet, daß die Deckglasur mindestens einen feinteiligen, im Fett eingelagerten und darin unlöslichen Feststoff enthält, der vorzugsweise mindestens teilweise aus Milcheiweiß, insbesondere Casein, besteht.

4. Verpackung nach Anspruch 3, dadurch gekennzeichnet, daß der feinteilige Feststoff ausschließlich aus Milcheiweiß besteht.

5. Verpackung nach Anspruch 2, dadurch gekennzeichnet, daß die mindestens eine Grundierung einen höheren Verfestigungstemperaturbereich besitzt als die Deckglasur.

6. Verpackung nach Anspruch 2 oder 5, dadurch gekennzeichnet, daß die Deckglasur hydrophob eingestellt ist, insbesondere hydrophober als die darunterliegende Haftgrundierung.

7. Verpackung nach einem der vorhergehenden Ansprüche, dadurch gekennzeichnet, daß die Deckglasur säurestabil bis mindestens pH 4 ist, insbesondere stabil gegenüber Milchsäure ist.

8. Verpackung nach einem der Ansprüche 2 bis 7, dadurch gekennzeichnet, daß der feinteilige Feststoff aus-

schließlich aus Casein, besteht.

9. Verpackung nach einem der Ansprüche 2 bis 7, dadurch gekennzeichnet, daß der feinteilige Feststoff aus einer Mischung aus Milcheiweiß und einem in Wasser quellbaren Stoff besteht.

10. Verpackung nach einem der Ansprüche 2 bis 9, dadurch gekennzeichnet, daß das Casein Säure-Casein oder lösliches Casein ist.

11. Verpackung nach einem der vorhergehenden Ansprüche, dadurch gekennzeichnet, daß die Deckglasur mindestens teilweise aus einem gehärteten Fett, insbesondere Sojahartfett besteht.

12. Verpackung nach einem der vorhergehenden Ansprüche, insbesondere nach Anspruch 10, dadurch gekennzeichnet, daß die Deckglasur eine Fettmischung aus Sojahartfett und Kokosfett enthält, die vorzugsweise 30 - 90 Gew.% Sojahartfett und 70 - 10 Gew.% Kokosfett enthält.

13. Verpackung nach einem der Ansprüche 2 bis 12, dadurch gekennzeichnet, daß der Feststoff in der Deckglasur in mengen von 10 bis 80 Gew.%, insbesondere 15 - 20 Gew.% enthalten ist.

14. Verpackung nach einem der vorhergehenden Ansprüche, dadurch gekennzeichnet, daß sie mit mindestens einem flüssige Bestandteile enthaltenden Nahrungsmittel, insbesondere auf wäßriger und/oder ölhaltiger Basis, gefüllt ist.

15. Verpackung nach einem der vorhergehenden Ansprüche, dadurch gekennzeichnet, daß sie aus im wesentlichen zuckerfreiem Dauerbackwarenteig hergestellt ist.

16. Verpackung nach einem der Ansprüche 1 bis 14, dadurch gekennzeichnet, daß sie weiß ist und aus einem Stärkemehlteig gebacken ist.

17. Verfahren zur Herstellung der Verpackung nach einem der Ansprüche 1 bis 16, dadurch gekennzeichnet, daß zur Abdichtung der gewünschten Packungs-Bereiche, die mit mindestens einer Grundierung, insbesondere auf Basis von Kokosfett vorimprägniert sind, mindestens eine saccharosefreie Deckglasur aufgebracht und durch Abkühlen verfestigt wird, wobei die mindestens eine Grundierung einen höheren Verfestigungstemperaturbereich besitzt als die Deckglasur und die Deckglasur hydrophober eingestellt ist als die darunterliegende Haftgrundierung und/oder die Deckglasur mindestens einen feinteiligen, im Fett eingelagerten und darin unlöslichen Feststoff enthält, der mindestens teilweise aus Casein besteht.

18. Verfahren nach Anspruch 17, dadurch gekennzeichnet, daß die Deckglasur erst kurz vor dem Befüllen der Verpackung aufgebracht, das Behältnis danach zur Verfestigung der Deckglasur gekühlt und das gekühlte Behältnis dann gefüllt und ggf. verschlossen wird.

19. Verfahren nach einem der Ansprüche 17 oder 18, dadurch gekennzeichnet, daß die Masse der Deckglasur vor dem Auftragen nur wenig über ihre Verfestigungstemperatur erwärmt wird und vorzugsweise bei einer Temperatur aufgebracht wird, die unter der Erweichungstemperatur der Grundierung liegt.

20. Verfahren nach Anspruch 18 oder 19, dadurch gekennzeichnet, daß die Deckglasur auf das vorgekühlte, vorzugsweise eine Temperatur unter +15 °C aufweisende Wandmaterial der Verpackung aufgebracht wird.

21. Verfahren nach einem der Ansprüche 17 - 20, dadurch gekennzeichnet, daß die Grundierung und/oder die Deckglasur vor dem Aufbringen pasteurisiert oder kurzzeiterhitzt werden.

## Claims

1. Pack for foods made from rottable, porous material, provided on at least one part of the inner wall for sealing purposes with at least two different fat-based impregnations, whereof at least one is a first coat and at least one other is a closed cover glaze, characterized in that the at least one cover glaze is free from saccharose, the at least one first coat has a higher setting temperature range than the cover glaze and the latter is more hydrophobic than the underlying adhesive base coating.

2. Pack for foods made from rottable, porous material, provided on at least one part of the inner wall for sealing purposes with at least two different fat-based impregnations, whereof at least one is a first coat and at least one other is a closed cover glaze, which contains at least one finely divided solid incorporated in the fat and insoluble therein, characterized in that the at least one cover glaze is free from saccharose and that the at least one finely divided solid is caseine.

3. Pack according to claim 1, characterized in that the cover glaze contains at least one finely divided solid incorporated in the fat and insoluble therein and preferably at least partly comprises milk protein, particularly caseine.

4. Pack according to claim 3, characterized in that the finely divided solid exclusively comprises milk protein.

5. Pack according to claim 2, characterized in that the at least one first coat has a higher setting temperature range than the cover glaze.

6. Pack according to claim 2 or 5, characterized in that the cover glaze is hydrophobic and in particular more hydrophobic than the underlying adhesive base coating.

7. Pack according to one of the preceding claims, characterized in that the cover glaze is acid-stable up to at least a pH of 4 and in particular is stable with respect to lactic acid.

8. Pack according to one of the claims 2 to 7, characterized in that the finely divided solid exclusively comprises caseine.

9. Pack according to one of the claims 2 to 7, characterized in that the finely divided solid comprises a mixture of milk protein and a water-swellable substance.

10. Pack according to one of the claims 2 to 9, characterized in that the caseine is acid caseine or soluble caseine.

11. Pack according to one of the preceding claims, characterized in that the cover glaze at least partly comprises a hardened fat, particularly hardened soybean fat.

12. Pack according to one of the preceding claims, particularly according to claim 10, characterized in that the cover glaze is a fat mixture of hardened soybean fat and coconut fat, which preferably contains 30 to 90% by weight hardened soybean fat and 70 to 10% by weight coconut fat.

13. Pack according to one of the claims 2 to 12, characterized in that the solid is contained in the cover glaze in quantities of 10 to 80% and in particular 15 to 20% by weight.

14. Pack according to one of the preceding claims, characterized in that it is filled with at least one food containing liquid components, particularly on an aqueous and/or oily basis.

15. Pack according to one of the preceding claims, characterized in that it is produced from substantially sugar-free, long-life baking dough.

16. Pack according to one of the claims 1 to 14, characterized in that it is white and baked from a starch flour dough.

17. Process for producing the pack according to one of the claims 1 to 16, characterized in that for sealing the desired pack regions pre-impregnated with at least one first coat, particularly based on coconut oil, at least one saccharose-free cover glaze is applied and solidified by cooling, the at least one first coat having a higher setting temperature range than the cover glaze and the latter is more hydrophobic than the underlying adhesive base coating and/or the cover glaze contains at least one finely divided solid incorporated into the fat and insoluble therein and which at least partly comprises caseine.

18. Process according to claim 17, characterized in that the cover glaze is applied just prior to the filling of the pack, the container is then cooled for solidifying the cover glaze and then the cooled container is filled and optionally sealed.

19. Process according to one of the claims 17 or 18, characterized in that prior to application, the cover glaze

10

material is heated to just above its setting temperature and application preferably takes place at a temperature which is below the softening point of the first coat.

**20.** Process according to claims 18 or 19, characterized in that the cover glaze is applied to the precooled pack wall material, which is preferably at a temperature below 15°C.

**21.** Process according to one of the claims 17 to 20, characterized in that the first coat and/or cover glaze is pasteurized or briefly heated prior to application.

**Revendications**

**1.** Emballage pour les produits alimentaires et pour les denrées de luxe en matériau poreux putrescible, qui est revêtu, dans un but d'étanchéification sur au moins une partie de la face interne, d'au moins deux imprégnations différentes à base de matière grasse, dont au moins une est une couche de fond et au moins une autre est une glace de couverture fermée, caractérisé en ce que la glace de couverture présente en au moins une couche est exempte de saccharose, la couche de fond présente en au moins une épaisseur a une plage de température de solidification plus élevée que la glace de couverture et celle-ci est rendue plus hydrophobe que la couche de fond adhérente sous-jacente.

**2.** Emballage pour les produits alimentaires et pour les denrées de luxe en matériau poreux putrescible, qui est revêtu, dans un but d'étanchéification sur au moins une partie de la face interne, d'au moins deux imprégnations différentes à base de matière grasse, dont au moins une est une couche de fond et au moins une autre est une glace de couverture fermée, qui contient au moins une matière solide en fines particules enrobées dans la graisse et insolubles dans celle-ci, caractérisé en ce que la glace de couverture présente en au moins une couche est exempte de saccharose et en ce que la au moins une matière solide en fines particules est de la caséine.

**3.** Emballage selon la revendication 1, caractérisé en ce que la glace de couverture renferme au moins une matière solide à fines particules, enrobée dans la matière grasse et insoluble dans celle-ci, qui est constituée au moins en partie d'albumine de lait, en particulier de caséine.

**4.** Emballage selon la revendication 3, caractérisé en ce que la matière solide à fines particules est constituée exclusivement d'albumine de lait.

**5.** Emballage selon la revendication 2, caractérisé en ce que la couche de fond présente en au moins une épaisseur possède une plage de température de solidification plus élevée que celle de la glace de couverture.

**6.** Emballage selon la revendication 2 ou 5, caractérisé en ce que la glace de couverture est rendue hyrophobe, en particulier plus hydrophobe que la couche de fond adhérente sous-jacente.

**7.** Emballage selon l'une des revendications qui précèdent, caractérisé en ce que la glace de couverture est acido-résistante jusqu'à au moins pH 4, en particulier résistante vis-à-vis de l'acide lactique.

**8.** Emballage selon l'une des revendications 2 à 7, caractérisé en ce que la matière solide à fines particules est constituée exclusivement de caséine.

**9.** Emballage selon l'une des revendications 2 à 7, caractérisé en ce que la matière solide à fines particules est constituée d'un mélange d'albumine de lait et d'une matière gonflant dans l'eau.

**10.** Emballage selon l'une des revendications 2 à 9, caractérisé en ce que la caséine est de la caséine soluble ou caséine acide.

**11.** Emballage selon l'une des revendications qui précèdent, caractérisé en ce que la glace de couverture est constituée au moins en partie d'une matière grasse durcie, en particulier de graisse dure de soja.

**12.** Emballage selon l'une des revendications qui précèdent, en particulier selon la revendication 10, caractérisé en ce que la glace de couverture renferme un mélange de matières grasse constitué de graisse dure de soja et de graisse de coco, qui contient de préférence 30 à 90% en poids de graisse dure de soja et 70 à 10% en poids de graisse de coco.

13. Emballage selon l'une des revendications 2 à 12, caractérisé en ce que la matière solide de la glace de couverture est contenue dans des proportions comprises dans l'intervalle de 10 à 80% en poids, en particulier dans la plage allant de 15 à 20% en poids.

14. Emballage selon l'une des revendications qui précèdent, caractérisé en ce qu'il est rempli au moins d'un produit alimentaire renfermant des ingrédients liquides, en particulier sur une base aqueuse et/ou huileuse.

15. Emballage selon l'une des revendications qui précèdent, caractérisé en ce qu'il est réalisé à partir d'une pâte de pâtisserie de conserve, essentiellement sans sucre.

16. Emballage selon l'une des revendications 1 à 14, caractérisé en ce qu'il est blanc et constitué d'une pâte d'amidon.

17. Procédé de fabrication de l'emballage conforme à l'une des revendications 1 à 16, caractérisé en ce que pour réaliser l'étanchéification des zones souhaitées de l'emballage, qui sont préimprégnées d'au moins une couche de fond, en particulier à base de graisse de coco, on applique au moins une glace de couverture sans saccharose qui se solidifie par refroidissement, la couche de fond présente en au moins une épaisseur présentant une plage de température de solidification supérieure à celle de la glace de couverture et celle-ci étant rendue plus hydrophobe que la couche de fond adhérente sous-jacente et/ou la glace de couverture contenant au moins une matière solide en fines particules enrobées dans la graisse et insolubles dans celle-ci, constituées en partie au moins par de la caséine.

18. Procédé selon la revendication 17, caractérisé en ce que l'on n'applique la glace de couverture que peu avant le remplissage de l'emballage, en ce que l'on refroidit ensuite le récipient pour solidifier la glace de couverture et en ce que le récipient refroidi est ensuite rempli et, éventuellement, obturé.

19. Procédé selon l'une des revendications 17 ou 18, caractérisé en ce que la pâte de la glace de couverture n'est chauffée avant l'application que légèrement au-delà de sa température de solidification et, de préférence, appliquée à une température, qui se situe en-deçà de la température de ramollissement de la couche de fond.

20. Procédé selon la revendication 18 ou 19, caractérisé en ce que la glace de couverture est appliquée sur le matériau de la paroi de l'emballage prérefroidi, présentant de préférence une température inférieure à 15 °C.

21. Procédé selon l'une des revendications 17 à 20, caractérisé en ce que la couche de fond et/ou la glace de couverture est pasteurisée ou échauffée brièvement avant l'application.